(19) Europäisches Patentamt
European Patent Office
Office européen des brevets

(11) EP 3 877 332 B1

(12) **EUROPEAN PATENT SPECIFICATION**

(45) Date of publication and mention of the grant of the patent:
**06.04.2022 Bulletin 2022/14**

(21) Application number: **21700491.0**

(22) Date of filing: **07.01.2021**

(51) International Patent Classification (IPC):
***C01B 33/18*** *(2006.01)* ***C09C 1/30*** *(2006.01)*

(52) Cooperative Patent Classification (CPC):
**C09C 1/3081; C01B 33/183;** C01P 2004/60; C01P 2006/10

(86) International application number:
**PCT/EP2021/050150**

(87) International publication number:
**WO 2021/144181 (22.07.2021 Gazette 2021/29)**

(54) **FUMED SILICA WITH MODIFIED SURFACE ACTIVITY**

PYROGENE KIESELSÄURE MIT MODIFIZIERTER OBERFLÄCHENAKTIVITÄT

SILICE PYROGÉNÉE PRÉSENTANT UNE ACTIVITÉ DE SURFACE MODIFIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2020 EP 20151600**

(43) Date of publication of application:
**15.09.2021 Bulletin 2021/37**

(73) Proprietor: **Evonik Operations GmbH**
**45128 Essen (DE)**

(72) Inventors:
- **MENZEL, Frank**
  **63456 Hanau (DE)**
- **LAZAR, Björn**
  **63594 Hasselroth (DE)**
- **GERHARZ-KATLE, Bettina**
  **65597 Hünfelden (DE)**
- **LYGIN, Alexander**
  **64347 Griesheim (DE)**
- **GIESSELER, Mareike**
  **63477 Maintal (DE)**
- **GOLCHERT, Rainer**
  **64807 Dieburg (DE)**
- **MÜHLIG, Nina**
  **64850 Schaafheim (DE)**
- **AUL, Wolfgang**
  **63579 Freigericht (DE)**
- **RENGER, Tobias**
  **63538 Großkrotzenburg (DE)**

(74) Representative: **Evonik Patent Association**
**c/o Evonik Industries AG**
**IP Management**
**Bau 1042A/PB 15**
**Paul-Baumann-Straße 1**
**45772 Marl (DE)**

(56) References cited:
**EP-A1- 0 725 037** **EP-A1- 1 700 824**
**WO-A1-01/12731**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 877 332 B1

## Description

### Field of the invention

The present invention relates to a hydrophobized fumed silica powder with increased polarity, as well as the preparation method and the use thereof.

### Background of the invention

Silica powders, especially fumed silica powders, are very useful additives for a variety of different applications. To name just some of these applications, fumed silica can be used as rheology modifying or anti-settling agents for paints, coatings, silicones, and other liquid systems. Fumed silica powders can improve flowability of powders or optimize mechanical or optical properties of silicone compositions, as well as be used as fillers for pharmaceutical or cosmetic preparations, adhesives or sealants, toners and other compositions.

One crucial property of silica materials defining their suitability for a particular application is associated with surface polarity. Untreated silicas are hydrophilic due to the presence of polar silanol groups on their surface. However, surface polarity of silica can be significantly reduced by treatment with surface modifying agents, such as organosilanes.

### Description of the prior art

WO 01/12731 A1 describes preparation of hydrophic inorganic oxides, particularly precipitated silicas with a methanol wettability of 15-45%, useful for reinforcing polymeric compositions such as rubbers. Due to the nature of precipitated silicas, they have a relatively high hydroxyl group content of 2-15 OH/nm$^2$.

Due to a completely different process for their preparation, fumed silicas possess fundamentally different particle properties than the precipitated silicas. Thus, apart from different relative silanol group contents, also tamped densities (ca. 50 g/L for fumed vs above 200 g/L for precipitated) and a number of other properties are quite different. These different properties result in different application fields for fumed and precipitated silicas.

EP 1700824 A1 and EP 0725037 A1 disclose preparation of granules based on fumed silica with average grain size of 10-120 μm, tamped density of 220-700 g/L, pore volume of 0.5-2.5 mL/g. Such granules are prepared by dispersing fumed silica powder in water, spray drying of the dispersion, optionally heating and/or surface treatment with silanes. The granules can be used as catalyst supports or for glass applications. Silica granules described in EP 1700824 A1 and EP 0725037 A1 differ due to their preparation method from typical fumed silica powders with a tamped density of about 50 g/L. For many of the above-mentioned applications, the use of densified granules is not possible or less preferable than the use of typical undensified powders with a tamped density of less than 200 g/L.

Such fumed hydrophobic silica powders can be prepared by treatment of the corresponding hydrophilic silicas with silanes, as described for example in EP 0686676 A1. Such hydrophobic silicas have a carbon content of more than 1 wt% and are characterized by their high hydrophobicity (methanol wettability value of > 50%). Thus, the inventive examples 1, 3, 5, 6, 8 of this patent application show hydrophobic silicas with a carbon content of 3.0 - 5.7 wt%, and methanol wettability of 55-85%. Methanol wettability increases with the increasing carbon content and decreased Sears number. This latter value shows the ratio of free, i.e. not surface modified, acidic silanol groups of silica related to the amount of silica groups in the unmodified (hydrophilic) silica, determined by titration with sodium hydroxide solution. The Sears numbers of silica powders from the inventive examples of EP 0686676 A1 are in the range from 8 to 22%. Taking the value for the relative to the surface area amount of the silanol groups of an untreated hydrophilic silica powder for 2 SiOH/nm$^2$, as applied in EP 1433749 A1 for the same analytical method, the inventive examples of EP 0686676 A1 show the absolute value of silanol groups in the range 0.16 - 0.44 SiOH/nm$^2$. Due to their relatively low polarity, the silicas described in EP 0686676 A1 have relatively low compatibility with polar systems, such as the water-based ones.

One possible way to increase the polarity of hydrophobic silica powders is treating the hydrophilic silica with water prior to reacting it with a silane. Thus, the inventive example of WO 2009/015970 A1 discloses spraying of a silica powder with water and then with hexamethyldisilazane (HMDS), followed by thermal treatment at 65-285 °C. The resulting hydrophobic silica (comparative example 2 of the present invention) shows methanol wettability of > 50% and a relative to BET surface area silanol group amount of about 0.82 SiOH / nm$^2$. Such hydrophobized silicas have improved, but still limited compatibility with polar systems.

One conceivable way to further improve the compatibility of such hydrophobized silica materials with polar systems would be to decrease the amount of silanes used for the hydrophobization. Thus, EP 1433749 A1 describes preparation of partially hydrophobic silicas having a silanol group density of 0.9-1.7 SiOH / nm$^2$ particle surface and methanol wettability value of less than 30 %, which can be incorporated into the water-based resins. The preparation of such partially hydrophobic particles is carried out by using a reduced amount of 0.015-0.15 mmol silane pro g of a silica with a BET surface area of 100 m$^2$/g. The examples of such silicas shown in EP 1433749 A1 have a carbon content

of 0.3-1% by weight and a methanol wettability value of 0 - 15%. Thus, such silica particles are compatible with polar systems due to the absence of the major part of the hydrophobic groups on its surface, but are less hydrophobic. Considering the teaching of EP 0686676 A1, it seems to be generally impossible to have silica particles having both high hydrophobicity and a good compatibility with polar systems, i.e. the increased polarity.

**Problem and solution**

Thus, good compatibility of fumed hydrophobized silica powders with systems having both polar and nonpolar components, such as waterborne coating formulations containing organic binders, often remains problematic. Fumed silica particles hydrophobized with typical hydrophobic treatment reagents like hexamethyldisilazane (HMDS) either remain separated out from the polar binder system upon mixing or form the cracks in the final cured coating film. Therefore, there is a need for new fumed silica powders with a limited material density, which would be compatible with both polar and nonpolar systems, e.g. waterborne formulations and would allow preparing of compositions with high silica material loading, high homogeneity before and after curing. EP 1433749 A1 suggests using reduced amount of a silane for achieving partial hydrophobization of silica powders for this purpose. However, the hydrophobicity of the thus prepared silicas is insufficient. Moreover, it is very challenging to achieve a homogeneous hydrophobization of silica surface in this case.

Thus, the technical problem addressed by the present invention is that of providing a fumed silica powder having a limited material density with both high hydrophobicity and an increased polarity, these surface properties being homogeneously distributed throughout the whole material, suitable for incorporation into polar/nonpolar systems, such as water-based organic coatings.

The present invention provides fumed silica powder, surface treated with a surface treatment agent selected from the group consisting of organosilanes, silazanes, acyclic polysiloxanes, cyclic polysiloxanes, and mixtures thereof, wherein the powder has:

a) a number of silanol groups relative to BET surface area $d_{SiOH}$ of at least 0.85 SiOH/nm$^2$, as determined by reaction with lithium aluminium hydride;
b) a methanol wettability of more than 40 % by volume of methanol in methanol-water mixture;
c) a tamped density of not more than 200 g/L.

The silica powder according to the invention solves the above-mentioned technical problems. Such silica material is well compatible with both nonpolar and polar formulations, e.g. water-borne acrylate compositions, and enables one to achieve high silica loadings in such compositions.

**Silica powder**

The term "powder" in the context of the present invention encompass fine particles.

The number $d_{SiOH}$ of silanol groups relative to BET surface area of the silica powder of the present invention, expressed in SiOH-groups/nm$^2$, can be determined by the method described in detail on page 8, line 17 thru page 9, line 12 of EP 0725037 A1 by reaction of the silica powder with lithium aluminium hydride. The silanol (SiOH) groups of the silica are reacted with lithium aluminium hydride ($LiAlH_4$), the quantity of gaseous hydrogen formed during this reaction and thus the amount of silanol groups in the sample $n_{OH}$ (in mmol SiOH/g) is determined. Using the corresponding BET surface area (in m$^2$/g) of the tested material, the silanol group content in mmol OH/g can be easily converted in number $d_{SiOH}$ of silanol groups relative to BET surface area:

$$d_{OH}\ [\text{SiOH/nm}^2] = (n_{OH}\ [\text{mmol SiOH/g}] \times N_A) / (\text{BET}\ [\text{m}^2/\text{g}] \times 10^{21}),$$

wherein $N_A$ is Avogadro number (~6.022*10$^{23}$)

The silica powder of the present invention has a hydroxyl group number relative to BET surface area $d_{OH}$ of at least 0.85 SiOH / nm$^2$, preferably at least 0.87 SiOH / nm$^2$, more preferably at least 0.89 SiOH / nm$^2$, more preferably at least 0.91 SiOH / nm$^2$, more preferably 0.91 SiOH / nm$^2$ - 2.50 SiOH / nm$^2$, more preferably 0.92 SiOH / nm$^2$ - 2.40 SiOH / nm$^2$, more preferably 0.93 SiOH / nm$^2$ - 2.30 SiOH / nm$^2$, more preferably 0.94 SiOH / nm$^2$ - 2.20 SiOH / nm$^2$, more preferably 0.95 SiOH / nm$^2$ - 2.10 SiOH / nm$^2$, more preferably 0.96 SiOH / nm$^2$ - 2.00 SiOH / nm$^2$, more preferably 0.97 SiOH / nm$^2$ - 1.90 SiOH / nm$^2$, more preferably 0.98 SiOH / nm$^2$ - 1.80 SiOH / nm$^2$, more preferably 0.99 SiOH / nm$^2$ - 1.75 SiOH / nm$^2$, more preferably 1.00 SiOH / nm$^2$ - 1.70 SiOH / nm$^2$, more preferably 1.05 SiOH / nm$^2$ - 1.65 SiOH / nm$^2$.

The silica powder according to the present invention preferably has a silanol group content of greater than 0.03

mmol SiOH /g, more preferably 0.04 mmol SiOH /g - 0.50 mmol SiOH /g, more preferably 0.05 mmol SiOH /g - 0.45 mmol SiOH /g, more preferably 0.07 mmol SiOH /g - 0.40 mmol SiOH /g, more preferably 0.10 mmol SiOH /g - 0.40 mmol SiOH /g, more preferably 0.15 mmol SiOH /g - 0.35 mmol SiOH /g.

The number of silicon atoms in the surface treatment agent relative to BET surface area of the silica powder $d_{[Si]}$ shows the relative to the surface area amount of surface treatment groups or fragments of such surface treatment groups, containing one silicon atom, present in the silica powder of the present invention.

The number of silicon atoms in the surface treatment agent relative to BET surface area of the silica powder $d_{[Si]}$ is at least 1.0 Si atoms / nm$^2$, preferably 1.2 Si atoms / nm$^2$ - 10 Si atoms / nm$^2$, more preferably 1.3 Si atoms / nm$^2$ - 9.0 Si atoms / nm$^2$, more preferably 1.4 Si atoms / nm$^2$ - 8.0 Si atoms / nm$^2$, more preferably 1.5 Si atoms / nm$^2$ - 7.0 Si atoms / nm$^2$, more preferably 1.8 Si atoms / nm$^2$ - 6.0 Si atoms / nm$^2$, more preferably 2.0 Si atoms / nm$^2$ - 5.0 Si atoms / nm$^2$.

The number of silicon atoms in the surface treatment agent relative to BET surface area of the silica powder of the present invention $d_{[Si]}$ [in Si atoms/nm$^2$] can be calculated from the carbon content of the silica powder related to the presence of the surface treatment (C*, in wt%), and considering the chemical structure of the surface treatment, particularly the number of carbon atoms per silicon atom of the surface treatment agent ($N_{C/Si}$):

$$d_{[Si]}\,[\text{Si atoms/nm}^2] = (C^*[\text{wt.\%}] \times N_A) / (Mr_C\,[\text{g/mol}] \times N_{C/Si} \times \text{BET}\,[\text{m}^2/\text{g}] \times 10^{20}),$$

wherein Mrc = 12,011 g/mol is an atomic weight of carbon,
$N_A$ is Avogadro number (~6.022*10$^{23}$).

$N_{C/Si}$ is the ratio of carbon to silicon atoms in the surface treatment agent.

Thus, for chlorotrimethylsilane [$(CH_3)_3SiCl$], $N_{C/Si}$ = 3. For hexamethyldisilazane [HMDS, $(CH_3)_3Si)_2NH$] $N_{C/Si}$ = 3. For polymethyldisiloxane [PDMS] $N_{C/Si}$ = 2.

For a mixture of two different surface treatment agents comprising silicon atoms, the same way of calculation as described above can be used with the difference that the molar average $N_{C/Si}$ value of the applied surface treatment agents is used. Thus, if a 1:1 molar mixture (50:50 molar %) of HMDS and PDMS is used as a surface treatment agent, the $N_{C/Si}$ value of (2*0.5 + 3*0.5) = 2.5 should be used for calculating $d_{[Si]}$.

The carbon content of the silica powder related to the presence of the surface treatment (C*) can be determined directly, e.g. by using solid NMR analysis ($^1$H or $^{13}$C NMR analysis) with an internal standard or calculated from the carbon content determined by elemental analysis by abstraction of the carbon content not related to the presence of the surface treatment, if the latter can be determined. In the simplest case, all the carbon content of the silica powder of the present invention determinable by the elemental analysis method originates from the surface treatment agent. Thus, for example for silica powder surface treated with hexamethyldisilazane containing no other additional components, the value of C* corresponds to the value of carbon content determined by elemental analysis.

The silica powder according to the invention can have a carbon content of from 0.2% to 15 % by weight, preferably from 0.3% to 12% by weight, more preferably from 0.5% to 10% by weight, more preferably from 1.0% to 8 % by weight, even more preferably from 1.2% to 5 % by weight, still even more preferably from 1.5% to 3.5 % by weight. The carbon content can be determined by elemental analysis according to EN ISO3262-20:2000 (Chapter 8). The analysed sample is weighed into a ceramic crucible, provided with combustion additives and heated in an induction furnace under an oxygen flow. The carbon present is oxidized to $CO_2$. The amount of $CO_2$ gas is quantified by infrared detectors. The stated carbon content of silica powder according to the invention refers to all carbon-containing components of the silica except for non-combustible compounds such as e.g. silicon carbide.

Analyzing the values of $d_{SiOH}$ and $d_{[Si]}$ of the silica powder of the present invention helps to characterize the extent of both hydrophilic and hydrophobic properties of the inventive silica powder.

The ratio $d_{[si]}/d_{SiOH}$ of the silica powder according to the present invention is preferably 0.5 to 10, more preferably 0.8 to 7.0, more preferably 1.0 to 5.0, more preferably 1.2 to 4.5, more preferably 1.5 to 4.0, more preferably 1.7 to 3.5, more preferably 1.8 to 3.4, more preferably 1.9 to 3.3, more preferably 2.0 to 3.2, more preferably 2.1 to 3.1, more preferably 2.2 to 3.1

A high ratio of $d_{[si]}/d_{SiOH} > 10$ corresponds to highly hydrophobic particles with a relatively low content of free silanol groups and hence low affinity of the material to polar systems. A low ratio of $d_{[si]}/d_{SiOH} < 0.5$, by contrast, is characteristic for highly polar materials with a relatively high free silanol group content, and good compatibility with polar systems, but a lower hydrophobicity. The silica powder of the present invention preferably has a $d_{[si]}/d_{SiOH}$ of 0.5 to 10 which makes it sufficiently polar to be incorporated into polar systems, such as water-based coating formulations, but still highly hydrophobic to be compatible with nonpolar systems, e.g. with organic binders of water-based coating compositions.

Importantly, both the silanol groups and the surface treatment species are distributed homogeneously on the surface of the inventive silica.

The silica powder according to the present invention preferably has a numerical median particle size $d_{50}$ of up to 500 μm, more preferably from 0.1 μm to 250 μm, more preferably from 1 μm to 200 μm, more preferably from 2 μm to 100 μm, more preferably from 5 μm to 80 μm, more preferably from 10 μm to 60 μm. A numerical median particle size of the silica powder can be determined according to ISO 13320:2009 by laser diffraction particle size analysis. The resulting measured particle size distribution is used to define the median $d_{50}$, which reflects the particle size not exceeded by 50% of all particles, as the numerical median particle size.

Tamped densities (also referred to as "tapped density") of various pulverulent or coarse-grain granular materials can be determined according to DIN ISO 787-11:1995 "General methods of test for pigments and extenders -- Part 11: Determination of tamped volume and apparent density after tamping". This involves measuring the apparent density of a bed after agitation and tamping. The silica powder of the invention has a tamped density of not more than 200 g/L, preferably of 20 g/L to 200 g/L, more preferably of 25 g/L to 150 g/L, more preferably of 30 g/L to 100 g/L, more preferably of 35 g/L to 80 g/L, more preferably of 40 g/L to 70 g/L.

The silica powder of the invention can have a BET surface area of greater than 20 $m^2/g$, preferably of 30 $m^2/g$ to 500 $m^2/g$, more preferably of 50 $m^2/g$ to 400 $m^2/g$, more preferably of 70 $m^2/g$ to 300 $m^2/g$, most preferably of 80 $m^2/g$ to 200 $m^2/g$. The specific surface area, also referred to simply as BET surface area, can be determined according to DIN 9277:2014 by nitrogen adsorption in accordance with the Brunauer-Emmett-Teller method.

Loss on drying (LOD) of the silica powder is preferably less than 5.0 wt%, more preferably less than 3.0 wt%, more preferably less than 2.0 wt%, more preferably less than 1.0 wt%, more preferably less than 0.8 wt%, more preferably less than 0.5 wt%. Loss on drying can be determined according to ASTM D280-01 (method A).

The values of pore volume, bulk density, skeletal density and porosity of the silica powder according to the invention can be determined by the mercury intrusion method according to DIN ISO 15901-1. The principle of this method firstly described by H.L Ritter and L.C Drake in Ind. Eng. Chem. Anal. Ed. 17 (1945) pp. 782-786 and pp 787-791, is based on measurement of the volume of mercury pressed into a porous solid body as a function of the pressure applied. Only the pores into which mercury can penetrate, i.e. generally the pores with a pore diameter of > 4 nm, at the pressure applied (generally maximally 400-420 MPa) are detected. Liquid mercury, not wetting the surface of a probe porous solid body, penetrates the pores only under pressure. The pressure to be applied is inversely proportional to the open width of the pore openings, in the case of cylindrical pores, the relationship between pore radius $r_p$ and pressure p is given by the Washburn equation:

$$r_p = -(2 \times \sigma / p) \times \cos\theta \quad (1)$$

wherein:

- $r_p$ is pore radius
- $p$ is pressure
- $\sigma$ is surface tension of mercury (0.48 N/m)
- $\theta$ is contact angle of mercury (140 °C)

The cumulative pore volume of pores > 4 nm corresponds to the cumulative pore volume of all pores determinable by mercury intrusion method according to DIN ISO 15901-1 up to the determination limit at maximum pressure of 417 MPa.

The cumulative pore volume of pores > 4 nm of the silica powder of the present invention determined by mercury intrusion method according to DIN ISO 15901-1 is preferably at least 8.0 $cm^3/g$, more preferably 8.0 $cm^3/g$ - 20 $cm^3/g$, more preferably 8.5 $cm^3/g$ -19.0 $cm^3/g$, more preferably 9.0 $cm^3/g$ -18.0 $cm^3/g$, more preferably 9.5 $cm^3/g$ -17.0 $cm^3/g$, more preferably 10.0 $cm^3/g$ -16.0 $cm^3/g$, more preferably 10.5 $cm^3/g$ -15.5 $cm^3/g$, more preferably 11.0 $cm^3/g$ -15.0 $cm^3/g$, more preferably 11.5 $cm^3/g$ - 14.5 $cm^3/g$, more preferably 12.0 $cm^3/g$ - 14.0 $cm^3/g$.

The cumulative pore volume of pores < 4 μm determined by mercury intrusion method according to DIN ISO 15901-1 corresponds to the cumulative pore volume of all pores < 4 μm (with exclusion of the pore volume corresponding to the pores of < 4nm diameter) determinable by this method.

The cumulative pore volume of pores > 4 μm of the silica powder of the present invention determined by mercury intrusion method according to DIN ISO 15901-1 is preferably 1.5 $cm^3/g$ - 7.0 $cm^3/g$, more preferably 2.0 $cm^3/g$ - 6.0 $cm^3/g$, more preferably 2.5 $cm^3/g$ - 5.5 $cm^3/g$, more preferably 2.7 $cm^3/g$ - 5.0 $cm^3/g$, more preferably 3.0 $cm^3/g$ - 4.9 $cm^3/g$, more preferably 3.1 $cm^3/g$ - 4.8 $cm^3/g$, more preferably 3.2 $cm^3/g$ - 4.7 $cm^3/g$, more preferably 3.3 $cm^3/g$ - 4.7 $cm^3/g$, more preferably 3.4 $cm^3/g$ - 4.6 $cm^3/g$, more preferably 3.5 $cm^3/g$ - 4.5 $cm^3/g$.

The percent ratio of a pore volume for pores < 4 μm to a cumulative pore volume of pores > 4 nm of the inventive silica powder is preferably less than 50%, more preferably 10% - 50%, more preferably 15% - 45%, more preferably 20% - 40%, more preferably 25% - 35%. The percent ratio of a pore volume for pores < 4 μm to a cumulative pore volume of pores > 4 nm can be found by dividing of the former by the latter pore volume and multiplying the result with 100%.

Bulk density determined by the mercury intrusion method according to DIN ISO 15901-1 is defined as the unit weight per unit volume of a material after the volume of the largest open pores has been subtracted. In the context of the present invention, the typical largest pores correspond to an intrusion pressure of 0.0031 MPa.

The silica powder according to the invention preferably has a bulk density $d_{bulk}$ determined by the mercury intrusion method according to DIN ISO 15901-1 at 0.0031 MPa of less than 0.20 g/mL, more preferably 0.020 g/mL - 0.150 g/mL, more preferably 0.040 g/mL - 0.100 g/mL, more preferably 0.045 g/mL - 0.095 g/mL, more preferably 0.050 g/mL - 0.090 g/mL, more preferably 0.055 g/mL - 0.085 g/mL, more preferably 0.060 g/mL - 0.080 g/mL, more preferably 0.065 g/mL - 0.075 g/mL.

The skeletal density of a sample of a material is a density without taking into consideration the porosity of the material, i.e. the ratio of the mass of the sample divided by the volume of this sample without the volume of all its pores. The skeletal density of the silica powder according to the invention can be calculated from the results of the analysis of the sample by mercury intrusion method according to DIN ISO 15901-1 after the volume of all pores larger than 4 nm (at maximal intrusion pressure of 417 MPa) has been excluded from the volume presumed occupied by the material.

The skeletal density of the silica powder of the present invention determined by mercury intrusion according to DIN ISO 15901-1 at 417 MPa is preferably at least 0.40 g/cm$^3$, more preferably at least 0.50 g/cm$^3$, more preferably 0.50 g/cm$^3$ - 2.00 g/cm$^3$, more preferably 0.51 g/cm$^3$ - 1.90 g/cm$^3$, more preferably 0.52 g/cm$^3$ - 1.80 g/cm$^3$, more preferably 0.53 g/cm$^3$ - 1.70 g/cm$^3$, more preferably 0.54 g/cm$^3$ - 1.60 g/cm$^3$, more preferably 0.55 g/cm$^3$ - 1.50 g/cm$^3$, more preferably 0.56 g/cm$^3$ - 1.40 g/cm$^3$, more preferably 0.57 g/cm$^3$ - 1.35 g/cm$^3$, more preferably 0.58 g/cm$^3$ - 1.30 g/cm$^3$, more preferably 0.59 g/cm$^3$ - 1.25 g/cm$^3$ more preferably 0.60 g/cm$^3$ - 1.20 g/cm$^3$ more preferably, more preferably 0.65 g/cm$^3$ - 1.10 g/cm$^3$ more preferably 0.70 g/cm$^3$ - 1.00 g/cm$^3$.

A relatively high skeletal density of the silica powder according to the present invention, when compared to the conventional silica powders, apparently results from the thermal treatment step of the process for producing such materials.

Porosity of the silica powder according to the invention can be calculated from the values of the bulk density ($d_{bulk}$) and of the skeletal density ($d_{sk}$) determined by the mercury intrusion method as described above, according to the following equation:

$$P = 100\%*(1 - d_{bulk}/d_{sk})$$

Silica powder of the invention preferably has porosity of at least 60 %, more preferably at least 65 %, more preferably at least 70 %, more preferably 70 % - 99 %, more preferably 75 % - 97 %, more preferably 80 % - 95 %, more preferably 82 % - 93 %, more preferably 84 % - 90 %.

## Silica

The silica powder of the invention is a pyrogenic (fumed) silica powder. Fumed silicas are prepared by means of flame hydrolysis or flame oxidation. This involves oxidizing or hydrolysing of hydrolysable or oxidizable starting materials, generally in a hydrogen/oxygen flame. Starting materials used for pyrogenic methods include organic and inorganic substances. Silicon tetrachloride is particularly suitable. The hydrophilic silica thus obtained is amorphous. Fumed silicas are generally in aggregated form. "Aggregated" is understood to mean that what are called primary particles, which are formed at first in the genesis, become firmly bonded to one another later in the reaction to form a three-dimensional network. The primary particles are substantially free of pores and have free hydroxyl groups on their surface. Such hydrophilic silicas can, as required, be hydrophobized, for example by treatment with reactive silanes.

It is known to produce pyrogenic mixed oxides by simultaneously reacting at least two different metal sources in the form of volatile metal compounds, for example chlorides, in a $H_2/O_2$ flame. One example of such an oxide is the $SiO_2/Al_2O_3$ mixed oxide, which is produced by Evonik under the name Aerosil® MOX 170. When producing Aerosil® MOX 170, a mixture of $SiCl_4$ and $AlCl_3$ is directly hydrolyzed in a flame. Corresponding silanes, such as, for example, methyltrichlorosilane, trichlorosilanes, etc., may also be used as a raw material instead of or in addition to the chlorides, as described in DE-A 952 891, DE-A 25 33 925 and DE-A 27 02 896.

All components of thus prepared mixed oxides, for example silica and alumina in the afore mentioned case, are generally distributed homogeneously in the whole mixed oxide material as opposed to the other kinds of materials like mechanical mixtures of several metal oxides, doped metal oxides and suchlike. In the latter case, e.g. for the mixture of several metal oxides, separated domains of the corresponding pure oxides may be present, which determine the properties of such mixtures.

The silica powder of the invention comprises silicon dioxide as a major component. Preferably, the silica powder comprises at least 50 %, more preferably at least 60 %, more preferably at least 70 %, more preferably 70 % - 99.9%, more preferably 80 % - 99.5 %, more preferably 90 % - 99.0 %, more preferably 92 % - 98.5 %, more preferably 95 %

- 98.0 % by weight of silicon dioxide.

**Surface treatment agent**

In the present invention, the term "hydrophobized with a surface treatment agent" relates to a chemical reaction of a material comprising silica with the corresponding surface treatment agent comprising a silicon atom, which by full or partial modification of free silanol groups of silica with hydrophobic groups comprising silicon atoms, imparts hydrophobic properties to the material comprising silica.

The terms "hydrophobized" or "hydrophobic" in the context of the present invention relate to the surface-treated particles having a low affinity for polar media such as water. The hydrophilic particles, by contrast, have a high affinity for polar media such as water. The hydrophobicity of the hydrophobic materials can typically be achieved by the application of appropriate nonpolar groups to the silica surface. The extent of the hydrophobicity of a hydrophobic oxide, e.g. silica can be determined via parameters including its methanol wettability, as described in detail, for example, in WO2011/076518 A1, pages 5-6. In pure water, a hydrophobic silica separates completely from the water and floats on the surface thereof without being wetted with the solvent. In pure methanol, by contrast, a hydrophobic silica is distributed throughout the solvent volume; complete wetting takes place. In the measurement of methanol wettability, a maximum methanol content at which there is still no wetting of the silica is determined in a methanol/water test mixture, meaning that 100% of the silica used remains separate from the test mixture after contact with the test mixture, in unwetted form. This methanol content in the methanol/water mixture in % by volume is called methanol wettability. The higher the level of such methanol wettability, the more hydrophobic the silica. The lower the methanol wettability, the lower the hydrophobicity and the higher the hydrophilicity of the material.

The silica powder of the present invention has a methanol wettability of methanol content greater than 40% by volume, more preferably of 40% to 90% by volume, more preferably of 45% to 85% by volume, especially preferably of 45% to 80% by volume, most preferably of 50% to 75% by volume in a methanol/water mixture.

The surface treatment agent is selected from the group consisting of organosilanes, silazanes, acyclic polysiloxanes, cyclic polysiloxanes, and mixtures thereof.

One type of preferred organosilanes is an alkyl organosilane of the general formula

$$R'_x(RO)_ySi(C_nH_{2n+1}) \qquad (Ia)$$

and

$$R'_x(RO)_ySi(C_nH_{2n-1}) \qquad (Ib)$$

wherein

R = alkyl, such as, for example, methyl-, ethyl-, n-propyl-, i-propyl-, butyl-
R' = alkyl or cycloalkyl, such as, for example, methyl, ethyl, n-propyl, i-propyl, butyl, cyclohexyl, octyl, hexadecyl.
n = 1-20
x+y = 3
x = 0-2, and
y = 1-3.

Among alkyl organosilanes of formula (Ia) and (Ib), particularly preferred are octyltrimethoxysilane, octyltriethoxysilane, hexadecyltrimethoxysilane, hexadecyltriethoxysilane.

Organosilanes used for surface treatment may contain halogens such as Cl or Br. Particularly preferred are the halogenated organosilanes of the following types:

- organosilanes of the general formula

$$X_3Si(C_nH_{2n+1}) \qquad (IIa)$$

and

$$X_3Si(C_nH_{2n-1}) \qquad (IIb),$$

wherein X = Cl, Br, n = 1 - 20;
- organosilanes of the general formula

$X_2(R')Si(C_nH_{2n+1})$ (IIIa)

and

$X_2(R')Si(C_nH_{2n-1})$ (IIIb),

wherein X = Cl, Br R' = alkyl, such as, for example, methyl, ethyl, n-propyl, i-propyl, butyl, cycloalkyl such as cyclohexyl n = 1 -20;

- organosilanes of the general formula

$X(R')_2Si(C_nH_{2n+1})$ (IVa)

and

$X(R')_2S'(C_nH_{2n-1})$ (IVb),

wherein X = Cl, Br

R' = alkyl, such as, for example, methyl, ethyl, n-propyl, i-propyl, butyl, cycloalkyl such as cyclohexyl
n = 1 - 20

Among halogenated organosilanes of formula (II)-(IV), particularly preferred are dimethyldichlorosilane and chloro trimethylsilane.

The used organosilanes can also contain other than alkyl or halogen substituents, e.g. fluorine substituents or some functional groups. Preferably used are functionalized organosilanes of the general formula

$(R'')_x(RO)_ySi(CH_2)_mR'$ (V),

wherein

R" = alkyl, such as methyl, ethyl, propyl, or halogen such as Cl or Br,
R = alkyl, such as methyl, ethyl, propyl,
x+y = 3
x = 0-2,
y= 1-3,
m = 1-20,
R' = methyl-, aryl (for example, phenyl or substituted phenyl residues), heteroaryl $-C_4F_9$, $OCF_2-CHF-CF_3$, $-C_6F_{13}$, $-O-CF_2-CHF_2$, $-NH_2$, $-N_3$, -SCN, $-CH=CH_2$, $-NH-CH_2-CH_2-NH_2$, $-N-(CH_2CH_2NH_2)_2$, $-OOC(CH_3)C = CH_2$, $-OCH_2-CH(O)CH_2$, $-NH-CON-CO-(CH_2)_5$, $-NH-COO-CH_3$, $-NH-COO-CH_2-CH_3$, $-NH-(CH_2)_3Si(OR)_3$, $-S_x-(CH_2)_3Si(OR)_3$, - SH, $-NR^1R^2R^3$ ($R^1$ = alkyl, aryl; $R^2$ = H, alkyl, aryl; $R^3$ = H, alkyl, aryl, benzyl, $C_2H_4NR^4R^5$ with $R^4$ = H, alkyl and $R^5$ = H, alkyl).

Among functionalized organosilanes of formula (V), particularly preferred are 3-methacryloxypropyltrimethoxysilane, 3-methacryloxypropyltriethoxysilane, glycidyloxypropyltrimethoxysilane, glycidyloxypropyltriethoxysilane, aminopropyltriethoxysilane.

Silazanes of the general formula $R'R_2Si-NH-SiR_2R'$ (VI), wherein R = alkyl, such as methyl, ethyl, propyl; R' = alkyl, vinyl, are also suitable as a surface treatment agent. The most preferred silazane of formula (VI) is hexamethyldisilazane (HMDS).

Also suitable as surface treatment agents are cyclic polysiloxanes, such as octamethylcyclotetrasiloxane (D4), decamethylcyclopentasiloxane (D5), dodecamethylcyclohexasiloxane (D6), hexamethylcyclotrisiloxane (D6). Most preferably among cyclic polysiloxanes, D4 is used.

Another useful type of surface treatment agents is polysiloxanes or silicone oils of the general formula (VII):

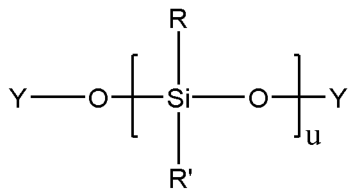

(VII),

wherein

Y = H, $CH_3$, $C_nH_{2n+1}$, wherein n=1-20, $Si(CH_3)_aX_b$,
wherein a = 2-3, b = 0 or1, a + b = 3,
X = H, OH, $OCH_3$, $C_mH_{2m+1}$, wherein m=1-20.
R, R' = alkyl, such as $C_oH_{2o+1}$, wherein o = 1 to 20, aryl, such as phenyl and substituted phenyl residues, heteroaryl, $(CH_2)_k$-$NH_2$, wherein k = 1-10, H,
u = 2-1000, preferably u = 3-100.

Most preferably among polysiloxanes and silicone oils of the formula (VII), polydimethylsiloxanes are used as surface treatment agents. Such polydimethylsiloxanes usually have a molar mass of 162 g/mol to 7500 g/mol, a density of 0.76 g/mL to 1.07 g/mL and viscosities of 0.6 mPa*s to 1 000 000 mPa*s.

**Process for producing the silica powder**

The present invention further provides a process for producing silica powder according to the invention, comprising the following steps:

a) subjecting hydrophilic silica powder with a tamped density of not more than 200 g/L to thermal treatment at a temperature of 300 °C to 1400 °C;
b) surface treatment the hydrophilic silica powder subjected to thermal treatment in step a) in the presence of a surface treatment agent selected from the group consisting of organosilanes, silazanes, acyclic polysiloxanes, cyclic polysiloxanes, and mixtures thereof and water,
c) optionally crushing or milling of silica after step a) and/or b).

In step a) of the process according to the invention, thermal treatment of the hydrophilic silica powder is conducted at a temperature 300 °C to 1400 °C, preferably at 400 °C - 1350 °C, more preferably at 500 °C -1300 °C, more preferably at 600 °C -1250 °C, more preferably at 700 °C -1220 °C, more preferably at 800 °C -1200 °C, more preferably at 900 °C - 1180 °C, more preferably at 950 °C -1150 °C, more preferably at 980 °C - 1140 °C. The duration of step a) depends on the temperature applied, and is generally from 1 second to 20 hours, preferably from 1 minute to 10 hours, more preferably from 5 minutes to 5 hours.

Thermal treatment in step a) of the inventive process leads to reducing the number of free silanol groups by condensation of such groups and formation of O-Si-O bridges.

The hydrophilic silica produced in step a) of the inventive process preferably has a number of silanol groups relative to BET surface area $d_{SiOH}$ of less than 2.0 $SiOH/nm^2$, more preferably 0.3 -1.9 $SiOH/nm^2$, more preferably 0.4 -1.8 $SiOH/nm^2$, more preferably 0.5 - 1.7 $SiOH/nm^2$, more preferably 0.5 -1.6 $SiOH/nm^2$, more preferably 0.5 -1.5 $SiOH/nm^2$, more preferably 0.6 -1.4 $SiOH/nm^2$, more preferably 0.7 - 1.3 $SiOH/nm^2$, as determined by reaction with lithium aluminium hydride.

In step b) of the inventive process, the hydrophilic silica powder subjected to thermal treatment in step a) is surface treated in the presence of a surface treatment agent and water.

The molar ratio of water to the silicon atoms in the surface treatment agent atom in step b) of the inventive process is preferably from 0.1 to 100, more preferably 0.5 to 50, more preferably 1.0 to 10, more preferably 1.2 to 9, more preferably 1.5 to 8, more preferably 2 to 7.

The use of both the surface treatment agent and water in step b) of the inventive process is essential for achieving the unique properties of the inventive silica powder, i.e. its relatively high hydrophobicity and relatively high polarity.

The surface treatment agent and/or water are preferably used in liquid form in the inventive process.

Step b) of the process according to the invention can be carried out at a temperature of 10 °C to 250 °C for 1 minute to 24 hours. The time and the duration of step b) can be selected according to the specific requirements for the process and/or targeted silica properties. Thus, the lower treatment temperature usually requires the longer hydrophobization times. In one preferred embodiment of the invention, hydrophobizing of the hydrophilic silica is performed at 10 to 80 °C for 3 to 24 hours, preferably for 5 to 24 hours. In another preferred embodiment of the invention, step b) of the process is carried out at 90 to 200 °C, preferably at 100 to 180 °C, most preferably at 120 to 160 °C for 0.5 to 10 hours, preferably for 1 to 8 hours. Step b) of the process according to the invention can be carried out under the pressure of 0.1 to 10 bar, preferably under 0.5 to 8 bar, more preferably at 1 to 7 bar, most preferably under 1.1 to 5 bar. Most preferably, step b) is performed in a closed system under natural vapour pressure of the used surface treatment agent at the reaction temperature.

In step b) of the inventive process, the hydrophilic silica subjected to thermal treatment in step a) is preferably sprayed first with liquid water and then with a liquid surface treatment agent, or first with a liquid surface treatment agent and then with liquid water, or with a liquid mixture of water and with a liquid surface treatment agent at ambient temperature (about 25 °C) and the mixture is subsequently treated thermally at a temperature of 50 °C to 400 °C over a period of 1 to 6 hours.

An alternative method for surface treatment in step b) can be carried out by treating the hydrophilic silica subjected to thermal treatment in step a) first with water and then with a surface treatment agent, or first with a surface treatment agent and then with water, or with a mixture of water and with a surface treatment agent, with water and/or a surface treatment agent being in the vapour form and subsequently treating the mixture thermally at a temperature of 50°C to 800 °C over a period of 0.5 to 6 hours.

The thermal treatment after the hydrophobization in step b) can be conducted under protective gas, such as, for example, nitrogen. The surface treatment can be carried out in heatable mixers and dryers with spraying devices, either continuously or batchwise. Suitable devices can be, for example, ploughshare mixers or plate, cyclone, or fluidized bed dryers.

The amount of surface treatment agent used depends on the type of the particles and of the surface treatment agent applied. However, usually from 1% to 25 %, preferably 2% - 20%, more preferably 5% - 18%, by weight of the surface treatment agent related to the amount of the hydrophilic silica subjected to thermal treatment in step a), is employed.

The amount of water used also depends on the type of the particles and of the surface treatment agent applied. However, usually from 0.5% to 15 %, preferably 1% - 12%, more preferably 2% - 10%, by weight of water related to the amount of the hydrophilic silica subjected to thermal treatment in step a), is employed.

The required amount of water and of the surface treatment agent can depend on the BET surface area of the hydrophilic silica employed. Thus, preferably, 0.1 μmol -100 μmol, more preferably 1 μmol -50 μmol, more preferably 3.0 μmol -20 μmol of silicon atoms in the surface treatment agent and 0.1 μmol -500 μmol, more preferably 1 μmol -100 μmol, more preferably 10 μmol -50 μmol of water per $m^2$ of the BET specific surface area of the hydrophilic silica subjected to thermal treatment in step a), is employed.

In optional step c) of the inventive process, hydrophilic silica subjected to thermal treatment in step a) and/or hydrophobized silica obtained in step b) are crushed or milled. Thus, particularly if coarse particles are used or obtained in step a) and/or b), those can be crushed in one or two subsequent steps c) to obtain silica powder.

Crushing or milling in optional step c) of the inventive process can be realized by means of any suitable for this purpose machine, e.g. by a mill.

If silica powders are both used and obtained in both steps a) and b), no crushing is necessary. Still, the obtained in this case silica powder can be crushed further, e.g. milled to obtain even smaller silica particles.

**Composition comprising the silica powder**

Another subject-matter of the present invention is composition comprising the silica powder of the invention.

The composition according to the invention can comprise at least one binder, which joins the individual parts of the composition to one another and optionally to one or more fillers and/or other additives and can thus improve the mechanical properties of the composition. Such a binder can contain organic or inorganic substances. The binder optionally contains reactive organic substances. Organic binders can, for example, be selected from the group consisting of (meth)acrylates, alkyd resins, epoxy resins, gum Arabic, casein, vegetable oils, polyurethanes, silicone resins, wax, cellulose glue and mixtures thereof. Such organic substances can lead to the curing of the composition used, for example by evaporation of the solvents, polymerization, crosslinking reaction or another type of physical or chemical transformation. Such curing can take place, for example, thermally or under the action of UV radiation or other radiation. Both single (one) component (1-C) and multicomponent systems, particularly two component systems (2-C) can be applied as binder. Particularly preferred for the present invention are water based or miscible with water (meth)acrylate-based binders and epoxy resins (preferably as two-component systems).

In addition to the organic binder or as an alternative thereto, the composition of the invention can contain inorganic curable substances. Such inorganic binders, also referred to as mineral binders, have essentially the same task as the organic binders, that of joining additive substances to one another. Furthermore, inorganic binders are divided

into non-hydraulic binders and hydraulic binders. Non-hydraulic binders are water-soluble binders such as calcium lime, Dolomitic lime, gypsum and anhydrite, which only cure in air. Hydraulic binders are binders which cure in air and in the presence of water and are water-insoluble after the curing. They include hydraulic limes, cements, and masonry cements. The mixtures of different inorganic binders can also be used in the composition of the present invention.

Apart from the silica powder and the binder, the composition according to the invention can additionally contain at least one solvent and/or filler and/or other additives.

The solvent used in the composition of the invention can be selected from the group consisting of water, alcohols, aliphatic and aromatic hydrocarbons, ethers, esters, aldehydes, ketones and the mixtures thereof. For example, the solvent used can be water, methanol, ethanol, propanol, butanol, pentane, hexane, benzene, toluene, xylene, diethyl ether, methyl tert-butyl ether, ethyl acetate, and acetone. Particularly preferably, the solvents used in the thermal insulating composition have a boiling point of less than 300°C, particularly preferably less than 200°C. Such relatively volatile solvents can be easily evaporated or vaporized during the curing of the composition according to the invention. Most preferably, the composition of the invention contain water as a sole solvent.

## Use of the silica powder

The inventive silica powder can be used as a constituent of paints or coatings, silicones, pharmaceutical or cosmetic preparations, adhesives or sealants, toner compositions, as well as for modifying rheology properties of liquid systems, as anti-settling agent, for improving flowability of powders, and for improving mechanical or optical properties of silicone compositions.

Moreover, the unique properties of the silica powder of the present invention allow using it as a precursor for producing silicas surface treated with at least two different surface treatment agents. Thus, the inventive silica powder is surface treated with at least one (first) surface treatment agent. Due to a relatively high number of silanol groups relative to BET surface area ($d_{SiOH}$), such silica materials can be further treated with at least one, preferably, another than used before, (second) surface treatment agent to obtain silica powder surface treated with at least two different surface treatment agents.

Accordingly, silica powder according to the invention surface treated with at least one first surface treatment agent can be used for preparing silica surface treated with at least two different surface treatment agents, at least one of which is different from the first surface treatment agent.

This method is quite different with respect to hydrophobization with the mixtures of silanes, as it allows to precisely control the amount and ratio of the applied surface treatment agents. Moreover, it allows to create particles with novel properties, wherein different surface treatment agents occupy particular positions on the silica surface.

## Examples

### Analytical methods. Determination/calculation of parameters.

**Methanol wettability** [vol % of methanol in methanol/water mixture] was determined according to the method described in detail, in WO2011/076518 A1, pages 5-6.

**Carbon content** [wt.%] was determined by elemental analysis according to EN ISO3262-20:2000 (Chapter 8). The analysed sample was weighed into a ceramic crucible, provided with combustion additives and heated in an induction furnace under an oxygen flow. The carbon present is oxidized to $CO_2$. The amount of $CO_2$ gas is quantified by infrared detectors. SiC is not burned and therefore does not affect the value of the carbon content.

The **number of silanol groups relative to BET surface area $d_{SiOH}$** [in SiOH/nm$^2$] was determined by reaction of the pre-dried samples of silica powders with lithium aluminium hydride solution as described in detail on page 8, line 17 thru page 9, line 12 of EP 0725037 A1.

The **number of silicon atoms in the surface treatment agent relative to BET surface area** of the silica powder of the present invention $d_{[Si]}$ [in Si atoms/nm$^2$] was calculated from the carbon content related to the presence of the surface treatment, and considering the chemical structure of the surface treatment, e.g. the number of carbon atoms per silicon atom of the surface treatment agent ($N_{C/Si}$:

$$d_{[Si]}\,[\text{Si atoms/nm}^2] = (C^*[\text{wt.\%}] \times N_A) / (Mr_C\,[\text{g/mol}] \times N_{C/Si} \times BET\,[\text{m}^2/\text{g}] \times 10^{20}) \quad (3),$$

wherein Mrc = 12,011 g/mol is an atomic weight of carbon,

$N_A$ is Avogadro number (~6.022*$10^{23}$).
$N_{C/Si}$ is the ratio of carbon to silicon atoms in the surface treatment agent.

The **$d_{[Si]}/d_{SiOH}$ ratio** was calculated by dividing the number of silicon atoms in the surface treatment agent relative to BET surface area ($d_{[Si]}$) by the number of silanol groups relative to BET surface area ($d_{SiOH}$).

**Loss on drying** (LOD, in wt. %) was determined according to ASTM D280-01 (method A). Specific **BET surface area** [$m^2/g$] was determined according to DIN 9277:2014 by nitrogen adsorption in accordance with the Brunauer-Emmett-Teller method.

**Preparation of silica powders**

Process parameters for preparation of silica powders can be found in Table 1. Physicochemical properties of the corresponding silica powders can be found in Table 2.

**Comparative Example 1**

A silica powder AEROSIL® R812 hydrophobized with HMDS (BET = 172 $m^2/g$, manufacturer: EVONIK Resource Efficiency GmbH) was used as a reference material.

**Comparative Example 2**

A silica powder was prepared according to the (inventive) example of WO 2009/015970 A1 by hydrophobization of a hydrophilic silica with BET = 302 $m^2/g$ with HMDS in the presence of water and was used as a reference material.

**Comparative Example 3**

*Thermal treatment*

AEROSIL® 300 hydrophilic silica powder (BET = 300 $m^2/g$, manufacturer: EVONIK Resource Efficiency GmbH) was subjected to thermal treatment in an XR 310 chamber kiln from Schroder Industrieöfen GmbH. For this purpose, multiple layers with a bed of height up to 1 cm were subjected to a temperature programme. The temperature ramp was 300 K/h up to the target temperature of 1025°C; the hold time was 3 hours; then the samples were cooled (without active cooling) until removal.

*Hydrophobization*

Hydrophobization of the thermally treated powder was effected at elevated temperature over the gas phase. For this purpose, hexamethyldisilazane (HMDS, 8.6 wt% relative to the weight of the thermally treated hydrophilic silica powder) as hydrophobizing agent was evaporated. Silica powder was heated in a thin layer to 100°C in a desiccator and then evacuated. Subsequently, vaporized HMDS was admitted into the desiccator until the pressure had risen to 300 mbar. After the sample had been purged with air, it was removed from the desiccator.

**Example 1**

Silica powder of example 1 was prepared similarly to comparative example 3, but for the hydrophobization part, which was conducted as follows:
Hydrophilic silica powder after sintering step (100 g) was put in a grounded metal bucket and mixed by a propeller mixer at 500 rpm, and water (2.8 g) was sprayed at continuous stirring at 25 °C onto their surface followed by spraying of hexamethyldisilazane (HMDS) (11 g). The mixing was continued for 15 minutes. After this time, the bucket was sealed with a lid containing several holes of 0.5-1mm diameter for pressure compensation and stored for 6 hours at 145°C in an oven. After this time, the silica powder was put into a drying pan and dried in a thin layer of up to 1 cm thickness in the nitrogen atmosphere at 145°C in an oven for 3 h to evaporate the volatiles.

**Example 2**

Silica powder of example 2 was prepared similarly to comparative example 3, but for the hydrophobization part, which was conducted as follows:
Hydrophilic silica powder after sintering step (100 g) was put in a grounded metal bucket and mixed by a propeller mixer at 500 rpm, and water (5.0 g) was sprayed at continuous stirring at 25 °C onto their surface followed by spraying of hexamethyldisilazane (HMDS) (10 g). The mixing was continued for 15 minutes. After this time, the bucket was sealed with a lid containing several holes of 0.5-1mm diameter for pressure compensation and stored for 6 hours at 145°C in

an oven. After this time, the silica powder was put into a drying pan and dried in a thin layer of up to 1 cm thickness in the nitrogen atmosphere at 145°C in an oven for 3 h to evaporate the volatiles.

**Example 3**

Silica powder of example 3 was prepared similarly to comparative example 3, but for the hydrophobization part, which was conducted as follows:
Hydrophilic silica powder after sintering step (100 g) was put in a grounded metal bucket and mixed by a propeller mixer at 500 rpm, and water (10 g) was sprayed at continuous stirring at 25 °C onto their surface followed by spraying of hexamethyldisilazane (HMDS) (15 g). The mixing was continued for 15 minutes. After this time, the bucket was sealed with a lid containing several holes of 0.5-1mm diameter for pressure compensation and stored for 6 hours at 145°C in an oven. After this time, the silica powder was put into a drying pan and dried in a thin layer of up to 1 cm thickness in the nitrogen atmosphere at 145°C in an oven for 3 h to evaporate the volatiles.

**Example 4**

Silica powder of example 4 was prepared similarly to comparative example 3, but for the hydrophobization part, which was conducted as follows:
Hydrophilic silica powder after sintering step (100 g) was put in a grounded metal bucket and mixed by a propeller mixer at 500 rpm, and water (10 g) was sprayed at continuous stirring at 25 °C onto their surface followed by spraying of hexamethyldisilazane (HMDS) (9.4 g). The mixing was continued for 15 minutes. After this time, the bucket was sealed with a lid containing several holes of 0.5-1mm diameter for pressure compensation and stored for 6 hours at 145°C in an oven. After this time, the silica powder was put into a drying pan and dried in a thin layer of up to 1 cm thickness in the nitrogen atmosphere at 145°C in an oven for 3 h to evaporate the volatiles.

The silica powders of comparative examples 1-3 and example 1 were all prepared using the same amount of the surface treatment agent (HMDS) related to the BET surface area of the hydrophilic silica powder (Table 1). In comparative examples 1 and 3, no water was used during the hydrophobization, in comparative example 2 no thermal treatment was performed (Table 1). Examples 1-4 according to the invention differ only in the quantity of HMDS and water applied (Table 1).

Table 2 summarizes the physicochemical properties of the thus obtained silica powders. The silica powder prepared in comparative example 2 shows a higher $d_{SiOH}$ number (0.82 SIOH/nm$^2$) than the silicas in the both comparative examples 1 (0.46 SIOH/nm$^2$) and 3 (0.16 SIOH/nm$^2$). However, the $d_{SiOH}$ number of the silica powders from the inventive examples 1-4 are still substantially higher (0.91-1.23 SIOH/nm$^2$). The hydrophobicity of silica materials from examples 1-4 are comparable to that of the silica from comparative example 2. Thus, examples 1-4 show silica powders having an increased polarity at similar hydrophobicity when compared to the silica from comparative example 2.

**Table 1: Process parameters for preparing silica powders.**

| Example | BET before surface treatment, [m$^2$/g] | Thermal treatment, [°C] | surface treatment agent, (wt% related to silica)* | Si atoms in surface treatment agent /BET [μmol/m$^2$] | Water, [wt% related to silica] | water /BET [μmol/m$^2$] | Water/ Si atoms in surface treatment agent [mol/mol] |
|---|---|---|---|---|---|---|---|
| Comparative example 1 | 300 | No | HMDS (18) | 7.4 | 0 | 0 | 0 |
| Comparative example 2 | 300 | No | HMDS (18) | 7.4 | 4.5 | 8.33 | 1.12 |
| Comparative example 3 | 185 | 1025 | HMDS (11, in vapour form) | 7.4 | 0 | 0 | 0 |
| Example 1 | 185 | 1025 | HMDS (11) | 7.4 | 2.8 | 8.41 | 1.14 |
| Example 2 | 185 | 1025 | HMDS (10) | 6.7 | 5.0 | 15.0 | 2.24 |

(continued)

| Example | BET before surface treatment, [$m^2$/g] | Thermal treatment, [°C] | surface treatment agent, (wt% related to silica)* | Si atoms in surface treatment agent /BET [$\mu$mol/$m^2$] | Water, [wt% related to silica] | water /BET [$\mu$mol/$m^2$] | Water/ Si atoms in surface treatment agent [mol/mol] |
|---|---|---|---|---|---|---|---|
| Example 3 | 185 | 1025 | HMDS (15) | 12.6 | 10 | 37.5 | 2.99 |
| Example 4 | 185 | 1025 | HMDS (9.4) | 9.4 | 10 | 37.5 | 4.78 |

**Table 2 Physico-chemical properties of the silica powders**

| Material (Example) | LOD, % | BET, $m^2$/g | methanol wettability, % | $d_{SiOH}$, [SIOH/ nm2] | C-content, [%] | d[Si], [Si/$nm^2$] | $d_{[Si]}$/ $d_{SiOH}$ |
|---|---|---|---|---|---|---|---|
| Comparative example 1 | < 0.5 | 260 | 55 | 0.46 | 2.5 | 1.61 | 3.5 |
| Comparative example 2 | < 0.4 | 220 | 65 | 0.82 | 3.5 | 2.66 | 3.1 |
| Comparative example 3 | < 0.1 | 190 | 45 | 0.16 | 1.13 | 0.99 | 6.2 |
| Example 1 | 0.1 | 148 | 60 | 0.90 | 1.8 | 1.98 | 2.2 |
| Example 2 | 0.1 | 148 | 60 | 0.91 | 2.0 | 2.27 | 2.5 |
| Example 3 | 0.1 | 146 | 65 | 0.96 | 2.4 | 2.72 | 2.8 |
| Example 4 | 0.1 | 150 | 65 | 1.23 | 2.6 | 2.93 | 2.4 |

## Claims

**1.** Fumed silica powder, surface treated with a surface treatment agent selected from the group consisting of organosilanes, silazanes, acyclic polysiloxanes, cyclic polysiloxanes, and mixtures thereof, wherein the powder has:

a) a number of silanol groups relative to BET surface area $d_{SiOH}$ of at least 0.85 SiOH/$nm^2$, as determined by reaction with lithium aluminium hydride;
b) a methanol wettability of more than 40 % by volume of methanol in methanol-water mixture;
c) a tamped density of not more than 200 g/L.

**2.** Silica powder according to claim 1, wherein the BET surface area of the silica powder is 30-500 $m^2$/g.

**3.** Silica powder according to either of claims 1 to 2,
wherein the surface treatment agent is selected from the group consisting of octyltrimethoxysilane, octyltriethoxysilane, hexadecyltrimethoxysilane, hexadecyltriethoxysilane, dimethyldichlorosilane, chloro trimethylsilane, octamethylcyclotetrasiloxane, 3-methacryloxypropyltrimethoxysilane, 3-methacryloxypropyltriethoxysilane, glycidyloxypropyltrimethoxysilane, glycidyloxypropyltriethoxysilane, aminopropyltriethoxysilane, hexamethyldisilazane, polydimethylsiloxanes, and mixtures thereof.

**4.** Silica powder according to either of Claims 1 to 3,
wherein numerical median particle size $d_{50}$ of the silica powder is less than 100 $\mu$m.

**5.** Silica powder according to either of Claims 1 to 4,

wherein carbon content of the silica powder is from 0.5% to 10% by weight.

6. Silica powder according to either of Claims 1 to 5, wherein the number of silicon atoms in the surface treatment agent relative to BET surface area of the silica powder $d_{[Si]}$ is at least 1.0 [Si atoms]/nm$^2$.

7. Silica powder according to either of Claims 1 to 6, wherein the silica has a cumulative pore volume of pores > 4 nm determined by mercury intrusion method according to DIN ISO 15901-1 of at least 8.0 cm$^3$/g.

8. Silica powder according to either of Claims 1 to 7, wherein the bulk density $d_{bulk}$ determined by the mercury intrusion method according to DIN ISO 15901-1 at 0.0031 MPa of the silica powder is less than 0.20 g/mL.

9. Silica powder according to either of Claims 1 to 8, wherein a skeletal density of the silica powder determined by the mercury intrusion method according to DIN ISO 15901-1 at 417 MPa $d_{sk}$ is at least 0.50 g/mL.

10. Silica powder according to either of Claims 1 to 9, wherein the porosity of the silica powder determined by the mercury intrusion method according to DIN ISO 15901-1 $P = (1 - d_{bulk}/d_{sk})$ is at least 60 %.

11. Silica powder according to either of Claims 1 to 10, wherein the ratio $d_{[si]}/d_{SiOH}$ of 0.5 to 10.

12. Process for producing silica powder according to either of claims 1 to 11, comprising the following steps:

a) subjecting hydrophilic silica powder with a tamped density of not more than 200 g/L to thermal treatment at a temperature of 300 °C to 1400 °C;
b) surface treatment the hydrophilic silica powder subjected to thermal treatment in step a) in the presence of a surface treatment agent selected from the group consisting of organosilanes, silazanes, acyclic polysiloxanes, cyclic polysiloxanes, and mixtures thereof and water.
c) optionally crushing or milling of silica after step a) and/or b).

13. Composition comprising silica powder according to either of Claims 1 to 11.

14. Use of silica powder according to either of Claims 1 to 11 surface treated with at least one first surface treatment agent for preparing silica surface treated with at least two different surface treatment agents, at least one of which is different from the first surface treatment agent.

15. Use of silica powder according to either of Claims 1 to 11 as a constituent of paints or coatings, silicones, pharmaceutical or cosmetic preparations, adhesives or sealants, toner compositions, as well as for modifying rheology properties of liquid systems, as anti-settling agent, for improving flowability of powders, and for improving mechanical or optical properties of silicone compositions.

**Patentansprüche**

1. Pyrogenes Siliciumdioxidpulver, das mit einem Oberflächenbehandlungsmittel ausgewählt aus der Gruppe bestehend aus Organosilanen, Silazanen, acyclischen Polysiloxanen, cyclischen Polysiloxanen und Gemischen davon oberflächenbehandelt ist, wobei das Pulver aufweist:

a) eine Anzahl von Silanolgruppen bezogen auf die BET-Oberfläche $d_{SiOH}$ von wenigstens 0,85 SiOH/nm$^2$, wie bestimmt durch Umsetzung mit Lithiumaluminiumhydrid;
b) eine Methanolbenetzbarkeit von mehr als 40 Vol.-% Methanol in Methanol-Wasser-Gemisch;
c) eine Stampfdichte von nicht mehr als 200 g/l.

2. Siliciumdioxidpulver gemäß Anspruch 1, wobei die BET-Oberfläche des Siliciumdioxidpulvers 30-500 m$^2$/g beträgt.

3. Siliciumdioxidpulver gemäß einem der Ansprüche 1 bis 2, wobei das Oberflächenbehandlungsmittel ausgewählt ist aus der Gruppe bestehend aus Octyltrimethoxysilan, Octyltriethoxysilan, Hexadecyltrimethoxysilan, Hexadecyltriethoxysilan, Dimethyldichlorsilan, Chlortrimethylsilan, Octamethylcyclotetrasiloxan, 3-Methacryloxypropyltrimethoxysilan, 3-Methacryloxypropyltriethoxysilan, Glycidyloxypropyltrimethoxysilan, Glycidyloxypropyltriethoxysilan, Aminopropyltriethoxysilan, Hexamethyldisilazan, Polydimethylsiloxanen und Gemischen davon.

4. Siliciumdioxidpulver gemäß einem der Ansprüche 1 bis 3, wobei die numerische mediane Partikelgröße $d_{50}$ des Siliciumdioxidpulvers weniger als 100 $\mu$m beträgt.

5. Siliciumdioxidpulver gemäß einem der Ansprüche 1 bis 4, wobei der Kohlenstoffgehalt des Siliciumdioxidpulvers von 0,5 Gew.-% bis 10 Gew.-% beträgt.

6. Siliciumdioxidpulver gemäß einem der Ansprüche 1 bis 5, wobei die Anzahl von Siliciumatomen in dem Oberflächenbehandlungsmittel bezogen auf die BET-Oberfläche des Siliciumdioxidpulvers $d_{[Si]}$ wenigstens 1,0 [Si Atome]/nm$^2$ beträgt.

7. Siliciumdioxidpulver gemäß einem der Ansprüche 1 bis 6, wobei das Siliciumdioxid ein kumulatives Porenvolumen von Poren > 4 nm, bestimmt durch das Quecksilberintrusionsverfahren gemäß DIN ISO 15901-1, von wenigstens 8,0 cm$^3$/g aufweist.

8. Siliciumdioxidpulver gemäß einem der Ansprüche 1 bis 7, wobei die Schüttdichte $d_{Schütt}$, bestimmt durch das Quecksilberintrusionsverfahren gemäß DIN ISO 15901-1 bei 0,0031 MPa, des Siliciumdioxidpulvers kleiner als 0,20 g/ml ist.

9. Siliciumdioxidpulver gemäß einem der Ansprüche 1 bis 8, wobei eine Skelettdichte des Siliciumdioxidpulvers, bestimmt durch das Quecksilberintrusionsverfahren gemäß DIN ISO 15901-1 bei 417 MPa, $d_{sk}$, wenigstens 0,50 g/ml beträgt.

10. Siliciumdioxidpulver gemäß einem der Ansprüche 1 bis 9, wobei die Porosität des Siliciumdioxidpulvers, bestimmt durch das Quecksilberintrusionsverfahren gemäß DIN ISO 15901-1, $P = (1 - d_{Schütt}/d_{sk})$, wenigstens 60 % beträgt.

11. Siliciumdioxidpulver gemäß einem der Ansprüche 1 bis 10, wobei das Verhältnis $d_{[Si]}/d_{SiOH}$ von 0,5 bis 10 beträgt.

12. Verfahren zur Herstellung von Siliciumdioxidpulver gemäß einem der Ansprüche 1 bis 11, umfassend die folgenden Schritte:

a) Unterwerfen von hydrophilem Siliciumdioxidpulver mit einer Stampfdichte von nicht mehr als 200 g/l an Wärmebehandlung bei einer Temperatur von 300 °C bis 1400 °C;
b) Oberflächenbehandlung des bei Schritt a) Wärmebehandlung unterworfenen hydrophilen Siliciumdioxidpulvers in Gegenwart eines Oberflächenbehandlungsmittels ausgewählt aus der Gruppe bestehend aus Organosilanen, Silazanen, acyclischen Polysiloxanen, cyclischen Polysiloxanen und Gemischen davon und Wasser;
c) gegebenenfalls Zerkleinern oder Mahlen von Siliciumdioxid nach Schritt a) und/oder b).

13. Zusammensetzung, umfassend Siliciumdioxidpulver gemäß einem der Ansprüche 1 bis 11.

14. Verwendung von Siliciumdioxidpulver gemäß einem der Ansprüche 1 bis 11, das mit wenigstens einem ersten Oberflächenbehandlungsmittel oberflächenbehandelt ist, zur Herstellung von Siliciumdioxid, das mit wenigstens zwei verschiedenen Oberflächenbehandlungsmitteln behandelt ist, von denen wenigstens eines von dem ersten Oberflächenbehandlungsmittel verschieden ist.

15. Verwendung von Siliciumdioxidpulver gemäß einem der Ansprüche 1 bis 11 als Bestandteil von Anstrichen oder Beschichtungen, Siliconen, pharmazeutischen oder kosmetischen Zubereitungen, Klebstoffen oder Dichtmitteln, Tonerzusammensetzungen, sowie zum Modifizieren von rheologischen Eigenschaften flüssiger Systeme, als Antiabsetzmittel, zum Verbessern der Fließfähigkeit von Pulvern und zum Verbessern von mechanischen oder optischen Eigenschaften von Siliconzusammensetzungen.

## Revendications

1. Poudre de silice pyrogénée, traitée en surface avec un agent de traitement de surface choisi dans le groupe constitué par des organosilanes, des silazanes, des polysiloxanes acycliques, des polysiloxanes cycliques et des mélanges correspondants, la poudre possédant :

   a) un nombre de groupes silanol par rapport à la superficie BET $d_{SiOH}$ d'au moins 0,85 SiOH/nm$^2$, tel que déterminé par réaction avec de l'hydrure d'aluminium et de lithium ;
   b) une mouillabilité au méthanol supérieure à 40 % par volume de méthanol dans un mélange méthanol-eau ;
   c) une densité après tassement non supérieure à 200 g/L.

2. Poudre de silice selon la revendication 1, la superficie BET de la poudre de silice étant de 30 à 500 m$^2$/g.

3. Poudre de silice selon l'une ou l'autre des revendications 1 et 2,
   l'agent de traitement de surface étant choisi dans le groupe constitué par l'octyltriméthoxysilane, l'octyltriéthoxysilane, l'hexadécyltriméthoxysilane, l'hexadécyltriéthoxysilane, le diméthyldichlorosilane, le chlorotriméthylsilane, l'octaméthylcyclotétrasiloxane, le 3-méthacryloxypropyltriméthoxysilane, le 3-méthacryloxypropyltriéthoxysilane, le glycidyloxypropyltriméthoxysilane, le glycidyloxypropyltriéthoxysilane, l'aminopropyltriéthoxysilane, l'hexaméthyldisilazane, des polydiméthylsiloxanes, et des mélanges correspondants.

4. Poudre de silice selon l'une des revendications 1 à 3, la taille médiane numérique de particule $d_{50}$ de la poudre de silice étant inférieure à 100 $\mu$m.

5. Poudre de silice selon l'une des revendications 1 à 4, la teneur en carbone de la poudre de silice étant de 0,5 % à 10 % en poids.

6. Poudre de silice selon l'une des revendications 1 à 5, le nombre d'atomes de silicium dans l'agent de traitement de surface par rapport à la superficie BET de la poudre de silice $d_{[Si]}$ étant d'au moins 1,0 [atomes de Si]/nm$^2$.

7. Poudre de silice selon l'une des revendications 1 à 6, la silice possédant un volume cumulatif de pores de pores > 4 nm déterminé par un procédé d'intrusion au mercure selon la norme DIN ISO 15901-1 d'au moins 8,0 cm$^3$/g.

8. Poudre de silice selon l'une des revendications 1 à 7, la densité apparente $d_{apparente}$ déterminée par le procédé d'intrusion au mercure selon la norme DIN ISO 15901-1 à 0,0031 MPa de la poudre de silice étant inférieure à 0,20 g/mL.

9. Poudre de silice selon l'une des revendications 1 à 8, une densité squelettique de la poudre de silice déterminée par le procédé d'intrusion au mercure selon la norme DIN ISO 15901-1 à 417 MPa $d_{sk}$ étant d'au moins 0,50 g/mL.

10. Poudre de silice selon l'une des revendications 1 à 9, la porosité de la poudre de silice déterminée par le procédé d'intrusion au mercure selon la norme DIN ISO 15901-1 $P = (1 - d_{apparente}/d_{sk})$ étant d'au moins 60 %.

11. Poudre de silice selon l'une des revendications 1 à 10, le rapport $d_{[Si]}/d_{SiOH}$ étant de 0,5 à 10.

12. Procédé pour la production d'une poudre de silice selon l'une des revendications 1 à 11, comprenant les étapes suivantes :

    a) soumission d'une poudre de silice hydrophile dotée d'une densité après tassement non supérieure à 200 g/L à un traitement thermique à une température de 300 °C à 1 400 °C ;
    b) traitement de surface de la poudre de silice hydrophile soumise au traitement thermique dans l'étape a) en la présence d'un agent de traitement de surface choisi dans le groupe constitué par des organosilanes, des silazanes, des polysiloxanes acycliques, des polysiloxanes cycliques et des mélanges correspondants et d'eau,
    c) éventuellement concassage ou broyage de la silice après l'étape a) et/ou b).

13. Composition comprenant une poudre de silice selon l'une des revendications 1 à 11.

14. Utilisation de poudre de silice selon l'une des revendications 1 à 11 traitée en surface avec au moins un premier agent de traitement de surface pour la préparation d'une silice traitée en surface avec au moins deux agents de

traitement de surface différents, au moins l'un desquels étant différent du premier agent de traitement de surface.

**15.** Utilisation de poudre de silice selon l'une des revendications 1 à 11 en tant que constituant de peintures ou de revêtements, de silicones, de préparations pharmaceutiques ou cosmétiques, d'adhésifs ou d'agents d'étanchéité, de compositions de toner, ainsi que pour la modification de propriétés de rhéologie de systèmes liquides, en tant qu'agent anti-sédimentation, pour l'amélioration de la fluidité de poudres et pour l'amélioration de propriétés mécaniques ou optiques de compositions de silicone.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0112731 A1
- EP 1700824 A1
- EP 0725037 A1
- EP 0686676 A1
- EP 1433749 A1
- WO 2009015970 A1
- DE 952891 A
- DE 2533925 A
- DE 2702896 A
- WO 2011076518 A1


### Non-patent literature cited in the description


- **H.L RITTER ; L.C DRAKE.** *Ind. Eng. Chem. Anal. Ed.,* 1945, vol. 17, 782-786, 787-791